# EUROPEAN PATENT SPECIFICATION

(11) **EP 2 717 245 B1**
(45) Date of publication and mention of the grant of the patent: **26.02.2020**
(21) Application number: 13187205.3
(22) Date of filing: 03.10.2013
(51) Int. Cl.: G09F 13/20

(54) **Colour afterglowing article**
Farbphosphoreszierender Artikel
Article à luminescence résiduelle de couleur

(30) Priority: 05.10.2012 SE 1251124
(43) Date of publication of application: 09.04.2014
(73) Proprietor: Systemtextgruppen AB, 200 41 Malmö (SE)
(72) Inventor: Jansson, Christer, 245 92 Staffanstorp (SE); Larsson, Daniel, 244 41 Kävlinge (SE)
(74) Representative: AWA Sweden AB

(56) References cited:
- WO-A1-02/067230
- WO-A1-2005/106827
- WO-A1-2008/097151
- GB-A- 2 147 542
- GB-A- 2 195 486
- JP-A- S6 032 695
- US-B1- 6 395 408

## Description

### The field of the invention

The present invention refers to a colour afterglowing article exhibiting colour reproduction in both daylight and in the dark.

### Technical background

Colour afterglowing articles, such in the form of signs, e.g. warning signs, are known. From for example WO02/067230 it is known to use afterglowing signs printed with afterglowing pigments, which signs have been printed with a screen print pattern of covering or transparent colour, to provide e.g. safety signs complying with the colour requirements in both daylight/illumination and colour afterglowing in the dark. These signs may up close give a disordered impression in view of the screen print pattern, e.g. a striped, checkered or spotted visual impression.

From WO2005/106827 it is further known to use afterglowing signs being printed with afterglowing pigments, where a sign material is used which has a colour surface and where the colour on this surface shines through the print with afterglowing pigments, wherein the coloured surface of the sign is created by printing with covering colour on the sign material. One problem with these signs, e.g. such signs as warning signs, is the fact that all colour tones do not give an equally good result with reference to colour reproduction and afterglow in the dark. One example is red colour tones which do not function as well as for example yellow or green colours. Furthermore, another problem is that the colour reproduction of these signs in daylight is not optimal as some of the afterglowing colours, which are arranged outermost of the sign, depress the beneath arranged colour.

In WO2008/097151 there is described what may be called a further development of the afterglowing sign according to above, where a second layer with fluorescent colour is applied on top of a first layer with afterglowing pigments or applied directly on top of a sign material if this comprises the afterglowing pigments. The fluorescent colours are intense which renders that they may be perceived as comparatively distinct in daylight. As such a comparatively thin layer of such colour may be used in signs according WO2008/097151 and as such the transillumination may be increased so that the colour afterglowing becomes better in the dark.

In US2002150721, there is disclosed a luminescent composite laminate structure for utility accessories and service hardware having luminosity for emergency and non-lighted conditions. The composite laminate structure includes a plurality of layers for the protection of the luminescent outer surface of the laminated hardware or accessories. The plurality of layers include an outer first layer, an inner second layer and an inner core third layer for covering the outer surface of such hardware or accessories. The outer first layer is a plastic protective covering for resistance to wear and impact and the outer first layer is covering the inner second layer and has an inner surface wall in contact with the inner second layer. The inner second layer is a plastic micro-thin covering having a plurality of micro-hole openings for the transfer of oxygen through the micro hole openings in order to increase visibility of the luminescent outer surface. The inner second layer is covering the inner third layer and having an inner surface wall in contact with said inner core third layer. The inner core third layer comprises afterglowing material, i.e. a luminescent material coating for providing luminosity to the outer surface of such hardware or accessories, and the inner core third layer is coating the outer surface of such hardware and accessories.

One of the disadvantages of the signs disclosed above is the fact that they are complicated products, which is also true for the laminate. This also causes the production costs to be comparatively high, especially if small series of a certain type of sign is to be produced.

One purpose of the present invention is to provide an afterglowing article, such as an afterglowing sign, e.g. a warning sign, which gives optimal colour reproduction in both daylight and in the dark, which is considerably easier to produce in terms of the process and which is considerably inexpensive to produce when compared to the ones above. The latter also implies that the freedom with reference to design and appearance is increased considerably when an article according to the present invention is produced. This is possible as also small series of a certain type of article may be profitable to produce.

### Summary of the invention

The purpose above is achieved by the colour afterglowing article according to the independent claim 1. The colour afterglowing article comprises an afterglowing material where the afterglowing material is complemented with a colour print of a non-afterglowing colour system, wherein the colour print has a colour value being less than 100% for each chosen colour of the colour system and/or wherein the afterglowing material is complemented with a colour screen print pattern of a non-afterglowing colour system, to provide the colour afterglowing article with colour reproduction in both daylight and in the dark without incorporation of afterglowing colour pigments in the colour afterglowing article.

The definition "to provide the colour afterglowing article with colour reproduction in both daylight and in the dark" implies that the afterglow obtained with the colour afterglowing article according to the present invention is in fact colour afterglow. This implies that the present invention renders it possible to obtain colour afterglow "without incorporation of afterglowing colour pigments", which is decisive difference in comparison to the signs described in WO02/067230, WO2005/106827 and WO2008/097151. In all of the signs according to WO02/067230, WO2005/106827 and WO2008/097151 colour afterglow, i.e. the colour impression in the dark, is obtained by having a sign material comprising a colour afterglowing material comprising colour pigments.

Furthermore, the micro-thin screen cover in US2002150721 is not a screen print pattern. Although the micro-thin screen cover has micro-openings, these are provided for transportation of oxygen. A "screen print pattern" or "screen pattern" according to the present invention complements the afterglowing material, implying that there is an interaction between the screen print pattern and the afterglowing material for reasons with respect to impression of the article. This is not the fact of the micro-thin screen cover according to US2002150721. The screen print pattern according to the present invention is further disclosed below. Moreover, also US2002150721, just as WO02/067230, WO2005/106827 and WO2008/097151, is directed to incorporation of materials with afterglowing pigments, i.e. luminescent chemical materials, to obtain colour afterglow. As said above, the present invention is directed to providing colour afterglow without the incorporation of afterglowing colour pigments in the article.

As should be understood from above, one of the basis of the present invention is the provision of colour afterglow without the incorporation of afterglowing colour pigments in the article. This may according to the present invention be obtained by means of an afterglowing material being complemented with a colour print of a non-afterglowing colour system where the colour print has a colour value being less than 100% for each chosen colour of the colour system, or, according to an example, by means of an afterglowing material being complemented with a colour screen print pattern of a non-afterglowing colour system, or by a combination of the above. As should be understood, "an afterglowing material" implies a material which gives afterglow in the dark, but which does not comprise colour pigments and hence does not provide colour afterglow in itself. Furthermore, it should also be understood that there are two main directions according to the present invention. A first is to incorporate a colour print which does not have the maximal colour values, and a second is a colour screen print pattern, wherein both prints come from non-afterglowing colour systems. The combination of the two variants is also possible according to the present invention.

The expression "has a colour value being less than 100% for each chosen colour of the colour system" implies that the colour value is less than 100% for each colour in a decided colour system. According to the invention, the colour system CMYK is used. CMYK is a colour model for four colour prints where the primary colours are cyan, magenta, yellow, and key (black). As should be understood from above, each of the colours in the CMYK system should be read individually according to the present invention. This implies that the colour value according to the present invention is below 100% for each colour chosen, but may have a total colour value being much higher as each colour is expressed individually. One example is a colour having 50% cyan, 50% magenta and 50 yellow, which gives a total colour value of 150%. Such a mixture is of course totally possible according to the present invention. However, none of the colours have a colour value of 100%. Furthermore, it may also be mentioned that the black colour is not a colour intended to be given high colour values in variants according to the present invention, which is dependent on the fact that black colour afterglow in the dark is not one of the interesting applications according to the present invention.

It should further be said that totally different colour systems of course could be possible. As an example such having more than four primary colours may be mentioned, e.g. CcMmYK having six colours (cyan, light cyan, magenta, light magenta, yellow and black) and Pantone Matching System (PMS) which is a colour system for decor colours where each colour (1114 in total) is represented by a number. As may be understood, each colour may be expressed individually with a colour value of from 0% up to 100%.

The expression "screen print may be further explained. A screen print pattern is a print which is not fully covering (non-flat) but instead creates a pattern on a surface. Examples are line pattern (line screen pattern) or dot pattern (dot screen pattern). Valid for all screen print patterns are that they are not covering the entire surface where they are printed. As such also parts of the beneath arranged surface are visible. This implies that when a screen print pattern is incorporated then such a screen print pattern may have a colour value of 100% for each of the chosen colours. This is in view of the fact that no transillumination is required where the screen print pattern is arranged to be able to still visualize the surface arranged beneath.

It may further be said that screen print pattern may also e.g. be called screen pattern or print pattern. It is important to understand that a screen print pattern may be printed by different techniques, not only screen printing. This is mentioned so that the expression "screen" is not confused in this sense.

In relation to the present invention it should further be said that an afterglowing article, such as for example a sign, of course may comprise very different parts, which in addition may be printed by use of different techniques. For example, a warning sign comprises symbols. Such symbols e.g. are intended to be white and also give light afterglow. Then these parts do not have to be overprinted by a white colour layer or complemented by a screen print pattern. However, that could be the case. The expression "complemented" thus implies a colour print and/or a colour screen print pattern being applied or printed on a surface of the article where such complement is intended, but not necessarily on the entire surface of the article.

### Short description of the drawings

Fig. 1 shows a warning sign according to one embodiment of the present invention.
Fig. 2 shows a similar warning sign according to another embodiment of the present invention, with certain addition in comparison to the one shown in fig. 1.
Fig. 3 shows a similar warning sign according to another embodiment of the present invention.
Fig. 4 shows another type of warning sign according to a similar embodiment of the present invention of that shown in fig. 3.

### Specific embodiments of the present invention

As described above, the CMYK colour system colour system is used. In the same way, different printing techniques may be used to provide a colour afterglowing article. According to one example the colour print is a screen print, an offset print or a thermal transfer print. All these types are printing techniques established today. According to the present invention, the colour print is a digital print. Digital printing may provide an advantage according to the present invention as this implies that minor series (runs) of a certain design of e.g. a sign may be provided cost efficiently.

By digital printing according to the present invention is meant e.g. "piezo ink-jet technique" or the like. There are different ways to perform digital printing. All are possible according to the present invention. It may, however, be mentioned that for example digital printing with solvent colours (dyes), use of latex technique and UV curing colours compose examples which are all possible according to the present invention.

The colour print may be applied by different means according to the present invention. According to one specific embodiment the colour print is printed directly on the afterglowing material. According to another embodiment the colour print is printed on a transparent layer being adhered to the afterglowing material. Such a transparent layer may for example be composed of a foil or a film. Transparent layers should according to the present invention not be seen as colour layers per se. In accordance with the embodiment above, a transparent layer which has been printed with a subsequent colour print may for example be adhered to the afterglowing material, such as by curing, gluing or another type of adhesion.

According to one specific embodiment of the present invention, the afterglowing material is adhered to a basic material arranged beneath. The basic material being arranged beneath may e.g. be composed of plastic, sheet metal, wood or something else. Such a basic material may for instance constitute the base in a sign and should as such be seen as the sign material being arranged beneath. In connection with the discussion above, it is important to understand that the basic material also may be afterglowing per se, and that the basic material and the afterglowing material in such a case are one and the same.

The colour value may vary according to the present invention. This variation depends on several parameters, such as the choice of colours to combine, the desired application, if the article has an incorporated screen print pattern or not, etc. According to one specific embodiment of the present invention, the colour print has a colour value in the range of 5-95% for each chosen colour in the colour system, such as a colour value in the range of 20-80%, for example 40-70%, for each chosen colour in the colour system. The approximate colour value which should be chosen thus depends to a great extent on inter alia colour tones. However, it may be mentioned that for example a level of 40-70% for each chosen colour in the colour system is a very interesting level according to the present invention as this provides both good colour impression in daylight and in the dark for many colours.

As mentioned above, the afterglowing material may be complemented with a colour print in the form of a screen print pattern which is printed directly on the afterglowing material or on a transparent layer which is adhered to the afterglowing material. Screen print patterns are further explained in detail below in connection to the description of the drawings. In the drawings there is shown two examples of print patterns, namely line screen print pattern and dot screen print pattern. It should be pointed out that different parts of a colour afterglowing article according to the present invention may have different prints. For example, some parts may have a screen print pattern while other parts, such as e.g. where symbols are arranged, do not have such a screen print pattern being arranged on top. It may further be said that for a screen print pattern then each chosen colour may have a colour value of 100%. In this case it is not intended to have transillumination (shine-through) where the screen print pattern part is applied and therefore it is normally desirable to keep this part as colour sharp/intense as possible.

As should be understood from above, the present invention embodies colour afterglowing articles which comprise both a colour print and a colour screen print pattern. According to one specific embodiment, the afterglowing material is complemented with a first colour print having a colour value being less than 100% for each chosen colour and wherein the afterglowing material is additionally complemented with a second colour print in the form of a screen print pattern being printed on top of said first colour print. Thus, according to this embodiment two different colour prints have been combined which are printed with non-afterglowing colour systems. Also in this case of course the colour value may vary, both for the first colour print and for the second colour print (screen print pattern), even if the latter normally is kept at 100% for each chosen colour. Therefore, according to one specific embodiment, the first colour print has a colour value in the range of 5-95% for each chosen colour in the colour system, such as a colour value in the range of 20-80%, e.g. 20-60%, such as 20-40%, for each chosen colour in the colour system. Also in this case the chosen colour value depends on the choice of colours, etc., but generally it may now be better to choose a somewhat lower level of colour value(s) as the colour afterglowing article also have been combined with a screen print pattern having a higher colour value. As such an optimal effect may be obtained by means of a distinct colour, for example distinct and clear green colour in daylight, which to a great extent is created by the screen print pattern, and also a distinct green afterglow in the dark which is obtained by means of the afterglowing material arranged beneath together with a fainter green colour print arranged above which clearly visibly shines through the screen print pattern. Here also a fainter green colour print may provide that the possibility of efficient charging of the afterglowing material arranged beneath is increased.

As mentioned above, a colour afterglowing article, such as a sign, e.g. a warning sign, may of course have different design according to the present invention. According to one embodiment of the invention, the colour afterglowing article comprises symbols and/or marks which differ from the general background of the colour afterglowing article. Examples of this are clearly shown in the drawings. According to one specific embodiment, the symbols and/or marks are surrounded by marked contour lines. This results in an increased contrast between a symbol and the background (another colour). This may be of particular interest for the reproduction in the dark as it is then possible to create a distinct sharp edge where each symbol ends and the picture background begins. A contour line according to the present invention may typically be constituted of a colour having a high colour value, which makes it "dark" and as such creates the intended contrast against the afterglow.

The colour afterglowing article may constitute many different types of applications. Examples are evacuation or warning articles, such as evacuation or warning signs. Many different colour choices, more or less all, are possible. However, for some applications, such as e.g. for evacuation or warning signs, some colour combinations are of certain interest. These are inter alia a green colour background together with white symbols or text, the corresponding, however with red background, and some types of signs where yellow and black colours are combined. There are of course many other examples, however the above mentioned may specifically be mentioned for those used in Sweden.

### Detailed description of the drawings

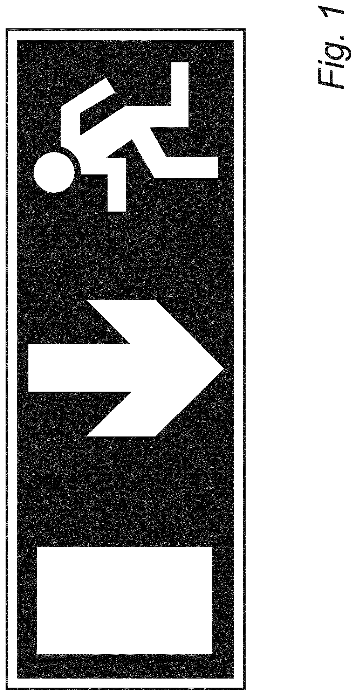

Fig. 1 shows a warning sign according to one embodiment of the present invention. In fig. 1 there is shown a warning sign comprising a bottom arranged sign material which has an afterglowing material on top. This afterglowing material has no colour afterglow in itself. Furthermore, the sign has a colour print, in this case suitably a green colour for the background and optionally also colour for the symbols and the frame, which colour print has a colour value being less than 100% for each chosen colour from a non-afterglowing colour system (i.e. green tone for the background and optionally white colour where symbols and frame are arranged). It should be said that the symbols are not necessarily printed with a colour print on top of the afterglowing material as a non-coloured afterglowing material may be perceived as white in daylight. The warning sign according to the present invention, shown in fig. 1, gives colour reproduction in both daylight and in the dark without the incorporation of afterglowing colour pigments. Furthermore, the warning sign is suitable to produce by digital printing.

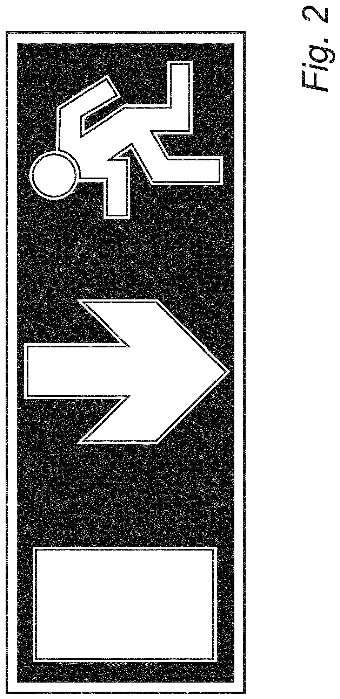

In fig. 2 there is shown a similar warning sign in accordance with fig. 1. In this case the symbols are surrounded by marked contour lines. These contour lines may be totally dark and also have colours with colour values of 100% for each chosen colour. This as these parts are only intended to create contrast and not colour afterglow in the dark.

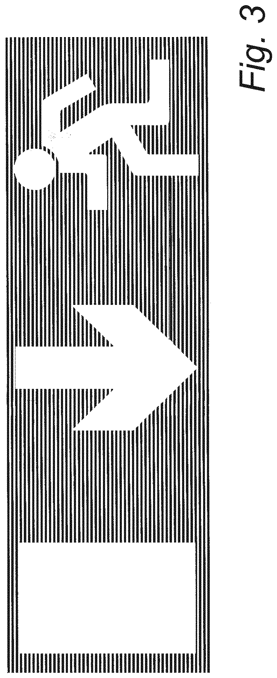

In fig. 3 there is shown a similar warning sign, but according to another embodiment of the present invention. In this case the afterglowing material is complemented by a screen print pattern, in this case a line pattern, which is printed in colour(s) from a non-afterglowing colour system. The line screen print pattern is suitably printed with a green colour and this screen print pattern may have a colour value of 100%. It should further be stated that the afterglowing material may firstly be complemented with a colour print to create green background, where chosen colour has a colour value being less than 100%, often considerably less than 100%, such as maybe 20-40%, and then secondly also a screen print pattern of green colour.

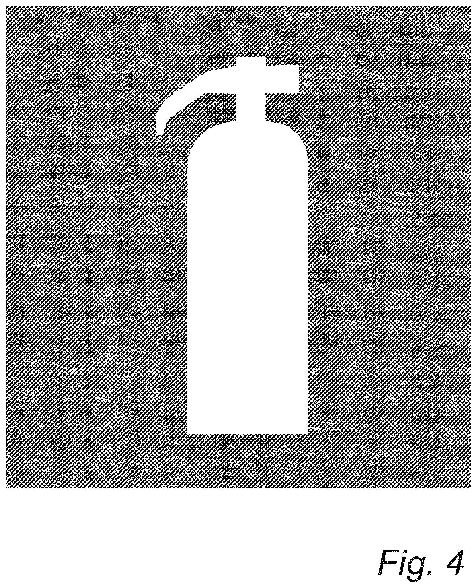

Fig. 4 shows another type of warning sign according to a similar embodiment of the present invention as the one shown in fig. 3. However, in this case a dot screen print pattern is used instead of a line screen print pattern. In this connection it should be stated that screen print patterns may be created with in principle any shapes, such as crosses, stars, etc. Furthermore, a warning sign according to fig. 4 suitably has a red background and a white symbol.

### Conclusions

The present invention provides a colour afterglowing article, such as an afterglowing sign, for example a warning sign, which gives optimal colour reproduction in both daylight and in the dark, which is considerably simpler to produce in terms of the process in an inexpensive manner also for small series (runs). The present invention provides such a colour afterglowing article where colour afterglow has been enabled without the use of colour afterglowing pigments.

## Claims

1. Colour afterglowing article comprising an afterglowing material, wherein the colour afterglowing article comprises a colour print of a non-afterglowing colour system, **characterized by** that the colour print has a colour value being less than 100% for each chosen colour of the colour system, when calculated in the colour system CMYK, wherein the colour print is a digital print, wherein the afterglowing material is free from colour pigments, and wherein the colour afterglowing article afterglows in the colours chosen in the colour system.

2. Colour afterglowing article according to claim 1, wherein the colour print is printed directly on the afterglowing material.

3. Colour afterglowing article according to claim 1, wherein the colour print is printed on a transparent layer being adhered to the afterglowing material.

4. Colour afterglowing article according to any of claims 1-3, wherein the afterglowing material is adhered to a basic material arranged beneath.

5. Colour afterglowing article according to any of claims 1-4, wherein the colour print has a colour value in the range of 5-95% for each chosen colour in the colour system.

6. Colour afterglowing article according to any of claims 1-5, wherein the colour print has a colour value in the range of 20-80% for each chosen colour in the colour system.

7. Colour afterglowing article according to any of claims 1-6, wherein the colour print has a colour value in the range of 40-70% for each chosen colour in the colour system.

8. Colour afterglowing article according to any of claims 1-7, wherein the afterglowing article comprises a colour print in the form of a screen print pattern being printed directly on the afterglowing material or on a transparent layer being adhered to the afterglowing material.

9. Colour afterglowing article according to any of claims 1-8, wherein the afterglowing article comprises a first colour print having a colour value being less than 100% for each chosen colour and wherein the afterglowing article also comprises a second colour print in the form of a screen print pattern being printed on top of said first colour print.

10. Colour afterglowing article according to claim 9, wherein the first colour print has a colour value in the range of 5-95% for each chosen colour in the colour system.

11. Colour afterglowing article according to claim 9 or 10, wherein the first colour print has a colour value in the range of 20-80% for each chosen colour in the colour system.

12. Colour afterglowing article according to any of claims 9-11, wherein the first colour print has a colour value in the range of 20-60% for each chosen colour in the colour system.

13. Colour afterglowing article according to any of claims 1-12, wherein the colour afterglowing article comprises symbols and/or marks, which differ from the general background of the colour afterglowing article.

14. Colour afterglowing article according claim 13, wherein symbols and/or marks are surrounded by marked contour lines.

15. Colour afterglowing article according to any of claims 1-14, wherein the colour afterglowing article is an evacuation or warning article.

## Patentansprüche

1. Farbphosphoreszierender Artikel, umfassend ein phosphoreszierendes Material, wobei der farbphosphoreszierende Artikel einen Farbdruck eines nicht-phosphoreszierenden Farbsystems umfasst, **dadurch gekennzeichnet, dass** der Farbdruck einen Farbwert kleiner als 100 % für jede gewählte Farbe des Farbsystems aufweist, wenn im CMYK-Farbsystem gerechnet wird, wobei der Farbdruck ein Digitaldruck ist, wobei das phosphoreszierende Material frei von Farbpigmenten ist und wobei der farbphosphoreszierende Artikel in den im Farbsystem gewählten Farben phosphoresziert.

2. Farbphosphoreszierender Artikel gemäß Anspruch 1, wobei der Farbdruck direkt auf das phosphoreszierende Material gedruckt ist.

3. Farbphosphoreszierender Artikel gemäß Anspruch 1, wobei der Farbdruck auf eine lichtdurchlässige Schicht gedruckt ist, die auf das phosphoreszierende Material aufgebracht wird.

4. Farbphosphoreszierender Artikel gemäß einem der Ansprüche 1-3, wobei das phosphoreszierende Material auf ein darunter angeordnetes Trägermaterial aufgebracht ist.

5. Farbphosphoreszierender Artikel gemäß einem der Ansprüche 1-4, wobei der Farbdruck einen Farbwert im Bereich von 5-95 % für jede im Farbsystem gewählte Farbe aufweist.

6. Farbphosphoreszierender Artikel gemäß einem der Ansprüche 1-5, wobei der Farbdruck einen Farbwert im Bereich von 20-80 % für jede im Farbsystem gewählte Farbe aufweist.

7. Farbphosphoreszierender Artikel gemäß einem der Ansprüche 1-6, wobei der Farbdruck einen Farbwert im Bereich von 40-70 % für jede im Farbsystem gewählte Farbe aufweist.

8. Farbphosphoreszierender Artikel gemäß einem der Ansprüche 1-7, wobei der phosphoreszierende Artikel einen Farbdruck in Form eines Siebdruckmusters umfasst, der direkt auf das phosphoreszierende Material oder auf eine lichtdurchlässige Schicht, die auf das phosphoreszierende Material aufgebracht wird, gedruckt ist.

9. Farbphosphoreszierender Artikel gemäß einem der Ansprüche 1-8, wobei der phosphoreszierende Artikel einen ersten Farbdruck umfasst, der einen Farbwert kleiner als 100 % für jede gewählte Farbe aufweist, und wobei der phosphoreszierende Artikel außerdem einen zweiten Farbdruck in Form eines Siebdruckmusters umfasst, der über den ersten Farbdruck gedruckt wird.

10. Farbphosphoreszierender Artikel gemäß Anspruch 9, wobei der erste Farbdruck einen Farbwert im Bereich von 5-95 % für jede im Farbsystem gewählte Farbe aufweist.

11. Farbphosphoreszierender Artikel gemäß Anspruch 9 oder 10, wobei der erste Farbdruck einen Farbwert im Bereich von 20-80 % für jede im Farbsystem gewählte Farbe aufweist.

12. Farbphosphoreszierender Artikel gemäß einem der Ansprüche 9-11, wobei der erste Farbdruck einen Farbwert im Bereich von 20-60 % für jede im Farbsystem gewählte Farbe aufweist.

13. Farbphosphoreszierender Artikel gemäß einem der Ansprüche 1-12, wobei der farbphosphoreszierende Artikel Symbole und/oder Kennzeichnungen umfasst, die sich vom allgemeinen Hintergrund des farbphosphoreszierenden Artikels abheben.

14. Farbphosphoreszierender Artikel gemäß Anspruch 13, wobei Symbole und/oder Kennzeichnungen von deutlichen Konturlinien umgeben sind.

15. Farbphosphoreszierender Artikel gemäß einem der Ansprüche 1-14, wobei der farbphosphoreszierende Artikel ein Artikel für Evakuierungs- oder Warnzwecke ist.

## Revendications

1. Article à luminescence résiduelle de couleur comprenant un matériau à luminescence résiduelle, l'article à luminescence résiduelle de couleur comprenant un imprimé en couleur d'un système de couleurs sans luminescence résiduelle, **caractérisé en ce que** l'imprimé en couleur a une valeur de couleur qui est inférieure à 100 % pour chaque couleur choisie du système de couleurs, lorsqu'elle est calculée dans le système de couleurs CMYK, l'imprimé en couleur étant un imprimé numérique, le matériau à luminescence résiduelle étant dépourvu de pigments de couleur, et l'article à luminescence résiduelle de couleur présentant une luminescence résiduelle dans les couleurs choisies dans le système de couleurs.

2. Article à luminescence résiduelle de couleur selon la revendication 1, dans lequel l'imprimé en couleur est directement imprimé sur le matériau à luminescence résiduelle.

3. Article à luminescence résiduelle de couleur selon la revendication 1, dans lequel l'imprimé en couleur est imprimé sur une couche transparente qui est collée au matériau à luminescence résiduelle.

4. Article à luminescence résiduelle de couleur selon l'une quelconque des revendications 1 à 3, dans lequel le matériau à luminescence résiduelle est collé à un matériau de base disposé au-dessous.

5. Article à luminescence résiduelle de couleur selon l'une quelconque des revendications 1 à 4, dans lequel l'imprimé en couleur a une valeur de couleur dans la gamme de 5-95 % pour chaque couleur choisie dans le système de couleurs.

6. Article à luminescence résiduelle de couleur selon l'une quelconque des revendications 1 à 5, dans lequel l'imprimé en couleur a une valeur de couleur dans la gamme de 20-80 % pour chaque couleur choisie dans le système de couleurs.

7. Article à luminescence résiduelle de couleur selon l'une quelconque des revendications 1 à 6, dans lequel l'imprimé en couleur a une valeur de couleur dans la gamme de 40-70 % pour chaque couleur choisie dans le système de couleurs.

8. Article à luminescence résiduelle de couleur selon l'une quelconque des revendications 1 à 7, l'article à luminescence résiduelle comprenant un imprimé en couleur sous la forme d'un motif sérigraphié qui est directement imprimé sur le matériau à luminescence résiduelle ou sur une couche transparente qui est collée au matériau à luminescence résiduelle.

9. Article à luminescence résiduelle de couleur selon l'une quelconque des revendications 1 à 8, l'article à luminescence résiduelle comprenant un premier imprimé en couleur ayant une valeur de couleur qui est inférieure à 100 % pour chaque couleur choisie et l'article à luminescence résiduelle comprenant également un deuxième imprimé en couleur sous la forme d'un motif sérigraphié qui est imprimé au-dessus dudit premier imprimé en couleur.

10. Article à luminescence résiduelle de couleur selon la revendication 9, dans lequel le premier imprimé en couleur a une valeur de couleur dans la gamme de 5-95 % pour chaque couleur choisie dans le système de couleurs.

11. Article à luminescence résiduelle de couleur selon la revendication 9 ou 10, dans lequel le premier imprimé en couleur a une valeur de couleur dans la gamme de 20-80 % pour chaque couleur choisie dans le système de couleurs.

12. Article à luminescence résiduelle de couleur selon l'une quelconque des revendications 9 à 11, dans lequel le premier imprimé en couleur a une valeur de couleur dans la gamme de 20-60 % pour chaque couleur choisie dans le système de couleurs.

13. Article à luminescence résiduelle de couleur selon l'une quelconque des revendications 1 à 12, l'article à luminescence résiduelle de couleur comprenant des symboles et/ou marques, qui diffèrent du fond général de l'article à luminescence résiduelle de couleur.

14. Article à luminescence résiduelle de couleur selon la revendication 13, dans lequel les symboles et/ou marques sont entourés par des lignes de contour marquées.

15. Article à luminescence résiduelle de couleur selon l'une quelconque des revendications 1 à 14, l'article à luminescence résiduelle de couleur étant un article d'évacuation ou d'avertissement.
